(19) Europäisches Patentamt
European Patent Office
Office européen des brevets

(11) Veröffentlichungsnummer: **0 329 029 B1**

(12) **EUROPÄISCHE PATENTSCHRIFT**

(45) Veröffentlichungstag der Patentschrift: **22.12.93**

(51) Int. Cl.$^5$: **C08G 65/40**

(21) Anmeldenummer: **89102296.4**

(22) Anmeldetag: **10.02.89**

Die Akte enthält technische Angaben, die nach dem Eingang der Anmeldung eingereicht wurden und die nicht in dieser Patentschrift enthalten sind.

# (54) Hochtemperaturbeständige aromatische Polyether.

(30) Priorität: **18.02.88 DE 3804988**

(43) Veröffentlichungstag der Anmeldung:
**23.08.89 Patentblatt 89/34**

(45) Bekanntmachung des Hinweises auf die Patenterteilung:
**22.12.93 Patentblatt 93/51**

(84) Benannte Vertragsstaaten:
**AT BE CH DE ES FR GB IT LI NL SE**

(56) Entgegenhaltungen:
**EP-A- 0 205 124**
**EP-A- 0 206 099**
**EP-A- 0 244 167**

(73) Patentinhaber: **RÖHM GMBH**
**Kirschenallee**
**D-64293 Darmstadt(DE)**

(72) Erfinder: **Knebel, Joachim, Dr.**
**Dieselstrasse 20**
**D-6100 Darmstadt(DE)**
Erfinder: **Ude, Werner, Dr.**
**Birngartenweg 115**
**D-6100 Darmstadt-Arheilgen(DE)**
Erfinder: **Vetter, Joachim, Dr.**
**Reuteralle 44**
**D-6100 Darmstadt(DE)**

EP 0 329 029 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft aromatische Polyether-Kunststoffe mit hohen Glas- und Zersetzungstemperaturen, die schwerbrennbare und thermoplastisch verarbeitbare Massen darstellen, sowie Verfahren zu ihrer Herstellung.

Stand der Technik

Aromatische Polyether mit Kunststoffeigenschaften gehören z.T. schon lange zum Stand der Technik und haben teilweise auch als technische Produkte wirtschaftliche Bedeutung erlangt. Für viele Anwendungszwecke vorteilhafte gemeinsame Eigenschaften der aromatischen Polyether sind ihre über 150 Grad C liegende Erweichungstemperatur und ihre thermoplastische Verarbeitbarkeit.

Zu den aromatischen Polyethern gehören neben Polymeren wie dem Polyxylenol, das als PPO im Handel bekannt ist, und das abwechselnd aus aromatischen- und Ethersauerstoffeinheiten in der Polymerkette aufgebaut ist, auch Polymere, die außer den charakteristischen Aromaten- und Sauerstoffeinheiten noch weitere charakteristische Atomgruppen im Polymermolekül enthalten.

Bekannt sind hier aromatische Polyäthersulfone, die auch als Polyarylsulfone bezeichnet werden und als technische Produkte auf dem Markt sind (Ullmanns Encyclopädie der technischen Chemie, 4. Auflage, Band 15, Seiten 429 bis 431 und 434 bis 435).

Aus der DE-A 32 03 186 (= US 4 492 805) sind aromatische Polyether mit phosphorhaltigen Strukturelementen, z.B. Triphenylphosphinoxideinheiten, in der Polymerkette bekannt, die sich als schwerbrennbare bzw. unbrennbare Kunststoffe auszeichnen.
Die Herstellung aromatischer Polyether kann im allgemeinen durch Polykondensation der chemischen Bausteine erfolgen. So werden beispielsweise phosphorhaltige Polyarylenether der DE-A 32 03 186 durch Polykondensation eines bifunktionellen Phosphins bzw. Phosphinoxides, insbesondere der entsprechenden Dihalogenverbindung, mit einer weiteren bifunktionellen aromatischen Verbindung, insbesondere einer Bishydroxyverbindung, erhalten.

Die chemischen Bausteine für die Polykondensation sind danach und wie auch in der US-Patentschrift 4 175 175 beschrieben, vorzugsweise symmetrische Verbindungen des Typs I

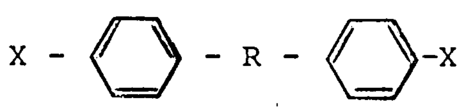

I

mit R: $SO_2$; CO;

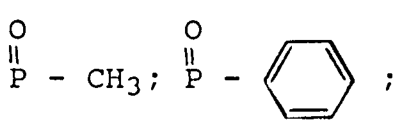

und X: F; Cl;
und symmetrische Verbindungen des Typs II

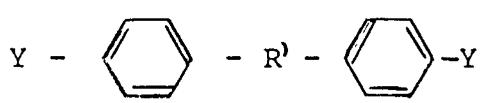

mit R′: kovalente Einfachbindung; O;

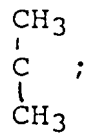

und Y : OH.

Als chemische Bausteine für die Herstellung der aromatischen Polyether kommen aber auch Verbindungen der Typen I und II in Frage, in denen die reaktiven Gruppen X bzw. Y ganz oder zur Hälfte gegen Y bzw. X ersetzt sind.

In Polymer Science USSR, 14, (1972), 2962 - 2970, sind aromatische Polyether des "Cardo" Typs beschrieben. Sie werden hergestellt durch Polykondensation von Dihalogenverbindungen des Typs I, wobei R $SO_2$ oder CO ist, mit Bisphenolen des Typs II, in denen R eine cyclische organische Gruppe ist, von welcher ein Kohlenstoffatom das die beiden aromatischen Ringe von Verbindungen des Typs II verbindende Glied ist. Dieses quartäre Kohlenstoffatom ist nach der Polykondensation Teil der Polymerhauptkette. Beispiele solcher Bisphenole sind danach u.a. Phenolphthalein und Phenolfluoren ( = 9,9-Bis-(4-hydroxyphenyl)fluoren).

Phosphorhaltige Polyarylenether, die analog derjenigen der DE-A 32 03 186 aufgebaut sind, aber "Cardo"-Bausteine, u.a. auch in 3,8-Stellung etherartig gebundene 5a, 10b-Diphenyl-cumarano-2′,3′,2,3-cumaran-Einheiten, neben den Phosphor-Bausteinen enthalten, sind in den deutschen Offenlegungsschriften 35 21 123 und 35 21 124 ( = US 4 696 993) genannt. Die phosphorhaltigen Polyether mit den Cumaran-Bausteinen befriedigen wegen ihres relativ hohen Wasseraufnahmevermögens und ihrer hohen Rauchbildung im Brandfall in ihrem Eigenschaftsbild noch nicht.

Aufgabe und Lösung

Es war daher die Aufgabe, aromatische Polyether mit in 3,8-Stellung etherartig gebundenen 5a,10b-Diphenyl-cumarano-2′,3′,2,3-cumaran-Bausteinen, die amorph, als Kunststoff verarbeitbar und stabil sind, sich durch hohe Glastemperaturen Tg auszeichen und sich in einer wesentlich verringerten Wasseraufnahme und verbessertem Brandverhalten von den aromatischen Polyethern mit der Phosphinoxid-Cumaran-Struktureinheit unterscheiden, zu finden.

Es wurde gefunden, daß durch vollständigen, aber auch schon durch teilweisen Ersatz des Phosphinoxid-Bausteins in dem bekannten "Phosphinoxid-Cumaran"-Polyether durch andere aromatische Bausteine, wie dem Benzophenon- oder dem Diphenylsulfon-Baustein, die beispielsweise mit Monomeren des oben angegebenen Typs I einbaubar sind, und in die auch noch andere aromatische Bausteine, beispielsweise über die ebenfalls oben angegebenen Monomeren des Typs II, einbaubar sind, aromatische Polyether erhalten werden, die neben bekannten guten Eigenschaften die in der Aufgabe skizzierten weiteren und vorteilhaften Eigenschaften aufweisen.

Die Erfindung betrifft daher hochtemperaturbeständige aromatische Polyether mit einer reduzierten Viskosität $\eta_{sp/C}$ > 0,25 dl/g, gemessen in Chloroform nach DIN 7745, Teil 2, entsprechend ISO 1628/6, und mit in 3,8-Stellung etherartig gebundenen 5a,10b-Diphenyl-cumarano-2′,3′,2,3-cumaran-Bausteinen A der wiederkehrenden Struktureinheit 1

$$[(A - O)_a (B - O)_b (C - O)_c], \quad (1)$$

worin
der Baustein A der Strukturformel

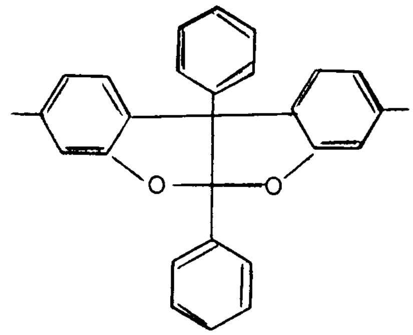

der Baustein B der Strukturformel

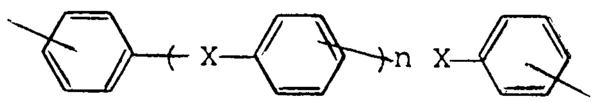

mit n = O oder 1, wobei X CO und/oder $SO_2$
und/oder

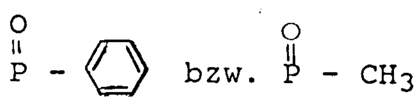
bzw.

sein kann, und der Baustein C einer oder mehreren weiteren in die Struktureinheit der Polymerkette gebundenen aromatischen Einheiten, in denen die aromatischen Elemente noch über weitere Gruppen, wie beispielsweise Sauerstoff oder Alkylengruppen, miteinander verbunden sein können, entsprechen, und die molaren Verhältnisse der Bausteineinheiten (A + C) und B

(a+c) : b = 1 : 1 bis 1 : 100 sind,

wobei für den Fall, daß X CO und/oder $SO_2$ und oder bis 99 Mol-% Phosphinoxid von der Summe der molaren Anteile der Carbonyl-, Sulfon- und Phosphinoxidgruppen, in der Struktureinheit 1 sind, die molaren Verhältnisse

a : c = 100 : 0 bis 1 : 99,

und für den Fall, daß X nur Phosphinoxidgruppen sind, die molaren Verhältnisse

a : c = 99 : 1 bis 1 : 99

betragen.

Die Erfindung betrifft damit auch Polyether mit der Struktureinheit 1, deren Anteil an Phosphinoxidgruppen in den B-Bausteinen maximal 90 Mol-%, vorzugsweise maximal 50 Mol-% der Summe der molaren Anteile der Carboxyl-, Sulfon- und Phosphinoxidgruppen beträgt, und insbesondere auch solche, die phosphinoxidfrei sind.
Enthalten die Polyether nur B-Bausteine mit Phosphinoxidgruppen, so liegen darin die molaren Anteile von A und C bevorzugt in den Verhältnissen

a : c = 90 : 10 bis 10 : 90 vor.

Von den Verhältnissen (a + c) : b = 1 : 1 bis 1 : 100 ist das Verhältnis (a + c) : b = 1 : 1 ein ausgezeichnetes.

Die über Ethersauerstoffbrücken miteinander verbundenen Bausteine A, B und C können in dem erfindungsgemäßen Polyether in regelmäßiger oder in statistischer Folge miteinander verknüpft sein.

Ein hervorragend geeigneter, erfindungsgemäßer Polyether besteht beispielhaft aus "Cumaran"-Einheiten (A), 4,4′-Benzophenon-Einheiten (B) und 2,2-Bis(1,4-phenylen)propan-Einheiten (C) in den molaren Verhältnissen

(a + c) : b = 1 : 1, wobei
a : c = 30 : 70 bis 100 : 0, vor allem
a : c = 30 : 70 bis 90 : 10 bedeuten.

Gegenüber bekannten Polyethern, einschließlich den bekannten des Cardo-Typs, haben die neuen, thermoplastisch verarbeitbaren Polymeren mit den "Cumaran"-Bausteinen A mit etwa 30 bis 50 Grad C höheren Wärmeformbeständigkeiten und als Kunststoffe mit geringerer Wasseraufnahme und die hydrolysestabil sind, deutliche Vorteile bei der Anwendung als Werkstoffe in technischen Bereichen, wie z.B. der Elektronikindustrie oder im Flugzeugbau. Die Glastemperaturen, Tg, der neuen erfindungsgemäßen Polyether liegen in Abhängigkeit vom strukturellen Aufbau im Bereich von etwa 150 bis 300 Grad C, insbesondere im Bereich von 180 bis 280 Grad C und vorteilhafterweise im Bereich von 200 bis 260 Grad C. Die neuen Polymeren sind amorph; sie lassen sich auch aus Lösungen gut weiterverarbeiten.

Ein Vorteil der neuen Polymeren ist, daß der "Cumaran"-Baustein A, eingeführt insbesondere über die entsprechende 3,8-Dihydroxiverbindung, so aus Benzaldehyd über Benzil und dessen Umsetzung mit Resorcin, d.h. aus billigen Ausgangsstoffen und in einfachen Verfahrensweisen zugänglich ist.

Durchführung der Erfindung

Für die Herstellung der neuen aromatischen Polyether (1) mit den aromatischen Grundbausteinen A, B und C durch Polykondensation werden im wesentlichen bifunktionelle chemische Bausteine A′, B′ und C′ eingesetzt, die sich von den Grundbausteinen A, B und C durch jeweils zwei zusätzliche funktionelle Gruppen unterscheiden. Als reaktive Verbindungen werden insbesondere solche mit Halogen, vorzugsweise mit Fluor und Chlor, und solche mit phenolischen Hydroxylgruppen, die vorzugsweise als Phenolat zur Reaktion gebracht werden, eingesetzt. Neben Dihalogenverbindungen und Bisphenolen, wie sie u.a. weiter oben als Verbindungen des Typs I und Verbindungen des Typs II beschrieben sind, kommen als bifunktionelle Ausgangsverbindungen auch solche infrage, die im gleichen Molekül sowohl eine Halogengruppe als auch eine phenolische Gruppe enthalten.

Die Verbindungen A′, B′ und C′ werden in einem solchen Verhältnis zueinander eingesetzt, daß die miteinander reagierenden Halogen- und OH-Gruppen äquivalent sind. Dadurch wird erreicht, daß die erfindungsgemäßen Polykondensate eine reduzierte Viskosität mit einem $\eta_{sp}/c$ > 25 dl/g, gemessen in Chloroform nach DIN 7745, Teil 2, entsprechend ISO 1628/6, und damit Kunststoffeigenschaften haben.

Die bei der Herstellung der neuen aromatischen Polyether anzuwendenden Polykondensationsbedingungen sind denen für die Herstellung von phosphorhaltigen Polyarylenethern nach DE-A 32 03 186 bzw. entsprechend US 4 492 805 oder der US 4 175 175 analog. Dies betrifft insbesondere die Verwendung geeigneter Reaktionsmedien und Lösungsmittel, wie z.B. Xylole oder polare-aprotische Lösungsmittel wie N-Methylpyrrolidon, Dimethylformamid, N,N-Dimethylacetamid, Dimethylsulfoxid, Sulfolan, die Reaktionstemperaturen von 100 bis 300 Grad C und die Kondensationsmittel, für die stark basische Alkaliverbindungen, insbesondere Natrium- oder Kaliumcarbonat oder Alkalihydroxide, wie KOH oder NaOH in einer zur abzuspaltenden Halogenidmenge etwa äquivalenten Menge eingesetzt werden. Zur Herstellung der Polymeren werden unter den genannten Bedingungen Reaktionszeiten von 30 Minuten bis etwa 50 Stunden benötigt.

Darüber hinaus kann die Herstellung der erfindungsgemäßen aromatischen Polyether vorteilhaft mit weiteren, bekannten Maßnahmen zur Herstellung von aromatischen Polyethern, wie dem Zusetzen von geringen Mengen von $Cu^{I}$- oder $Cu^{II}$-Verbindungen, wie z.B. $Cu_2O$ oder $Cu^{II}$-acetat, und/oder dem Zusetzen von Alkalisalzen, wie KF oder solchen von organischen Säuren durchgeführt werden (Journal of Polymer Science: Part C No. 16, pp. 715-724 (1967); EP-A 0 244 167) durchgeführt werden. Dadurch wird eine Beschleunigung der Polykondensation und/oder die Herabsetzung der Polykondensationstemperatur erreicht.

Die Gegenwart von Kupferverbindungen und/oder von Alkalisalzen, wie KF, wirkt sich sowohl bei der Herstellung der erfindungsgemäßen, den "Cumaran"-Baustein A-enthaltenden Polyethern, als auch bei der Herstellung von "Cumaran"-Baustein A-freien Polyethern, wie sie beispielsweise bei der Polykondensation von 4,4′-Difluorbenzophenon oder 4,4′-Dichlorbenzophenon mit Bisphenol A und 9,9-Bis-(4′-hydroxyphenyl)-fluoren erhalten werden (Deutsche Patentanmeldung P 37 25 058.2), beschleunigend auf die Umsetzung zum Erhalt von Polykondensaten mit relativ hohen Molekulargewichten, d.h. von Polykondensaten mit Kunststoffeigenschaften, aus. Die Polykondensation in Gegenwart von Kupferverbindungen und/oder Alkalisalzen wie KF, wirkt sich besonders vorteilhaft bei der Verwendung weniger reaktiver Ausgangsverbindungen, wie z.B. beim Einsetzen von 4,4′-Dichlorbenzophenon, aus.

Die Ausgangsverbindungen

Als Ausgangsverbindung A′ für die Einbringung der "Cumaran"-Einheit A in die erfindungsgemäßen Polyether (1) hat sich das aus Benzil und Resorcin nach Rec. Trav. Chim. Pays-Bas 1986, 87 (6), 599 - 608 herstellbare 3,8-Dihydroxi-5a,10b-diphenylcumarano-2′,3′,2,3-cumaran bewährt.

Für die Einführung des B-Bausteins in das Polykondensat (1) werden als Ausgangsverbindungen B′, solche der Formel

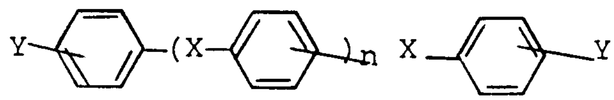

mit n = 0 oder 1 und

X = $SO_2$ oder CO und Y = Halogen, insbesondere F oder Cl, oder OH, wie 4,4′-Difluordiphenylsulfon, 4,4′-Dichlordiphenylsulfon, 4,4′-Dihydroxidiphenylsulfon, 4-Chlor-, 4′-hydroxidiphenylsulfon, 4,4′-Difluorbenzophenon, 4,4′-Dichlorbenzophenon, 4,4′-Dihydroxibenzophenon, 4-Chlor-, 4′-hydroxibenzophenon, 4,4′-Difluorterephthalophenon und/oder 4,4′-Difluorisophthalophenon eingesetzt.

Die funktionellen Halogen- bzw. Hydroxygruppen stehen bevorzugt in 4,4 -Stellung. In den Ausgangsverbindungen B können aber auch in untergeordneter Menge andere Stellungsisomere vorhanden sein.

Bei der Herstellung des Polyethers können als Ausgangsverbindungen B′ außer den oben angegebenen Verbindungen auch phosphorhaltige Verbindungen eingesetzt werden. Die funktionellen Gruppen stehen in diesen vorzugsweise in p-Stellung zu dem an das Phosphoratom gebundenen C-Atom. Bevorzugte phosphorhaltige Vertreter von B′ sind
4,4′-Dichlortriphenylphosphinoxid,
4,4′-Dichlordiphenylmethylphosphinoxid,
4,4′-Difluortriphenylphosphinoxid und
4,4′-Difluordiphenylmethylphosphinoxid.

Beispiele für Ausgangsverbindungen C′ zum Einbau von C in den Polyether sind Hydrochinon, 4,4′-Dihydroxydiphenyl 4,4′-Dihydroxydiphenylether, 2,2-Bis(4-hydroxyphenyl)propan oder bifunktionelle Cardoverbindungen wie z.B. 9,9-Bis(4-hydroxyphenyl)fluoren.

Die neuen Polyether können aber auch, wie dies in der deutschen Offenlegungsschrift 35 21 123 für phosphorhaltige Polyarylenether beschrieben ist, gegebenenfalls verzweigte Strukturen haben. Für die Einführung von Verzweigungsstellen im Polyether kommen als Ausgangsverbindungen C′ beispielsweise die Verbindungen Tris(4-fluorphenyl)phosphinoxid, Tris(4-hydroxiphenyl)phosphinoxid, 1,3,5-Tris(4′-hydroxiphenyl)benzol, 1,4-Bis(4′,4″-dihydroxitriphenylmethyl)benzol, aber gegebenenfalls auch aliphatische Polyhydroxiverbindungen, wie z.B. Pentaerythrit in Betracht.

BEISPIELE

Beispiel 1

Synthese eines Polyethers aus 4,4′-Difluorbenzophenon (1), Beisphenol A (2) und Dihydroxy-5a,10b-diphenyl-cumarano-2′,3′,2,3-cumaran (3) im Molverhältnis 1:2:3 = 4:1:3.

In einem 6 l Vierhalskolben mit Rührer, Innenthermometer, Stickstoffzuleitung und Wasserabscheider mit aufgesetztem Rückflußkühler wurden 85,6 g (0,375 mol) Bisphenol A, 443,7 g (1,125 mol) des Cumaranderivats 3, 327,3 g (1,5 mol) 4,4′-Difluorbenzophenon, 219,7 g Kaliumcarbonat, 2,25 l N-Methylpyrrolidon und 0,7 l techn. Xylolgemisch vorgelegt. Die Reaktionsmischung wurde nun unter Stickstoffatmosphäre mit einem Ölbad auf Rückflußtemperatur erhitzt und das sich bildende Wasser innerhalb von 2 Stunden ausgekreist. Nach vollständiger Entfernung des Wassers wurde das Xylol über den Wasserabscheider bei ca. 180 Grad C abdestilliert und das zurückbleibende Reaktionsgemisch bei dieser Temperatur so lange gehalten, bis das Molekulargewicht Mw des Polykondensats ca. 80 000 betrug (Messung: GPC,

Eichung mit Polystyrol). Anschließend wurden ca. 0,2 Mol Methylchlorid durch die Reaktionsmischung geleitet.

Nach Abkühlung wurde der Ansatz mit 500 ml N-Methylpyrrolidon verdünnt und von den festen Bestandteilen des Reaktionsgemischs abgesaugt. Der Polyether wurde anschließend in der 7-fachen Menge Wasser/Ethanol (Volumenverhältnis = 7 : 3) ausgefällt, von der Flüssigkeit durch Filtration getrennt und nach 18-stündigem Trocknen bei Raumtemperatur in möglichst wenig Methylenchlorid gelöst. Die Lösung wurde zur 5-fachen Menge Ethanol zugetropft, wobei das Polykondensat ausfiel. Das Produkt wurde in Vakuum bei 140 Grad C bis zur Gewichtskonstanz getrocknet. Ausbeute: 701 g (88 % d.Th.)

Die Analyse erfolgte durch C-13-NMR- bzw. IR-Spektroskopie.

An durch thermoplastische Verarbeitung (Extrusion) erhaltenen Werkstücken wurden folgende Eigenschaften ermittelt.

| Mw [1] | Reißdehnung (%) | E-Modul[2] (MPa) | Zugfestigkeit (MPa) | UI 94-Klassif.[3] | Rauch dichte[4] (1,5/4 min) | Glastemp.[5] (Grad C) | Wasseraufnahme[6] (23 Grad C) (%) |
|---|---|---|---|---|---|---|---|
| 96000 | 38 | 2750 | 81 | V-0 | 2/19 | ca.235 | 0,76 |

1) GPC, Eichung mit Polystyrol
2) DIN 53 455
3) Test der Underwriter Laboratories, USA; V - O ist beste Klassifizierung
4) Rauchkammer entsprechend den Vorschriften des National Bureau of Standards, USA
5) Differential Scanning Calorimetry (vgl. E.A. TURI, Ed. "Thermal Characterization of Polymeric Materials" pg. 169, Academic Press, New York 1981)
6) DIN 53 495

Beispiele 2 und 3

Die Umsetzung wurde wie in Beispiel 1 beschrieben durchgeführt, mit der Ausnahme, daß das Molverhältnis Bisphenol A: Cumaranderivat = 3 : 1 bzw. 1 : 1 betrug.

Man erhielt Kunststoffe mit folgenden Eigenschaften:

| Beisp. Nr. | Molverh. B.A:C | Reißdehnung (%) | E-Modul (MPa) | Zugfestigkeit (MPa) | UL94-Klassif. | Rauchdichte (1,5/4 min) | Glastemp. (Grad C) | Wasseraufnahme (23 °C) (%) |
|---|---|---|---|---|---|---|---|---|
| 2 | 3:1 | 65 | 2770 | 72 | V-1 | 3/41 | | |
| 3 | 1:1 | | | | V-0 | 1/13 | 223 | 0,6 |

Beispiel 4

Die Umsetzung wurde wie im Beispiel 1 beschrieben durchgeführt mit der Ausnahme, daß als Bisphenol nur Dihydroxy-5a,10b-diphenyl-cumarano-2′,3′,2,3-cumaran eingesetzt wurde.
Der Kunststoff besaß folgende Eigenschaften:

| Reißdehnung (%) | E-Modul (MPa) | Zugfestigkeit | UL94 Klassif. | Rauchdichte (1,5/4 min) | Glastemp. (Grad C) | Wasseraufnahme (23 Grad C) (%) |
|---|---|---|---|---|---|---|
| 9,2 | 2490 | 82,8 | V-0 | 1/7 | 274 | 0,88 |

Beispiele 5 bis 6

Die Umsetzung wurde wie in Beispiel 1 beschrieben durchgeführt mit den Ausnahmen, daß anstelle von 4,4′-Difluorbenzophenon das 4,4′-Dichlordiphenylsulfon verwendet wurde (in der gleichen Molmenge) und daß die Ansätze um den Faktor 5 verkleinert wurden. Dementsprechend wurden die Reaktionen im 2 l-Rundkolben durchgeführt. Die Reaktionszeiten blieben wie im Beispiel 1 beschrieben.

| Beispiel Nr. | Glastemperatur [1)] (Grad C) | Molverhältnis Bisphenol A: Cumaranbisphenol |
|---|---|---|
| 5 | 199 | 7 : 3 |
| 6 | 218 | 1 : 1 |

[1)] bestimmt durch Differential Scanning Calorimetry (DSC)

Beispiele 7 - 10

Die Umsetzung wurde wie in Beispiel 5 beschrieben durchgeführt, mit der Ausnahme, daß anstelle des Bisphenol A's andere Bisphenole eingesetzt wurden. Die Polyether werden erhalten aus 4,4′-Dichlordiphenylsulfon: Cumaranbisphenol: Bisphenol im Molverhältnis 2 : 1 : 1.

| Beispiel Nr. | Bisphenol | Glastemperatur (Grad C) |
|---|---|---|
| 7 | 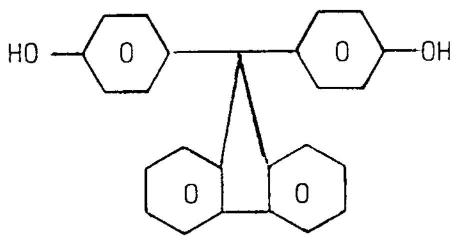 | 278 |
| 8 | 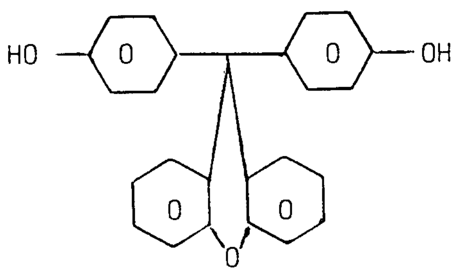 | 248 |
| 9 | 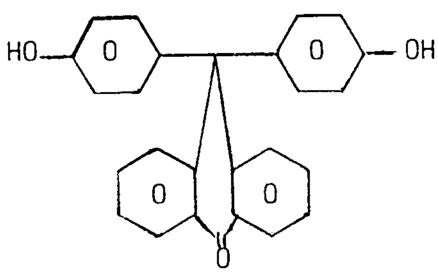 | 268 |
| 10 | 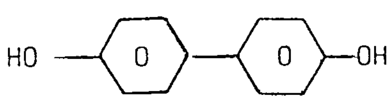 | 245 |

Beispiele 11 - 14

Es wurde wie in Beispiel 7 beschrieben gearbeitet mit der Ausnahme, daß anstelle des 4,4'-Dichlordiphenylsulfon das 4,4'-Difluortri phenylphosphinoxid eingesetzt wurde

| Beispiel Nr. | Bisphenol | Glastemperatur (Grad C) |
|---|---|---|
| 11 | 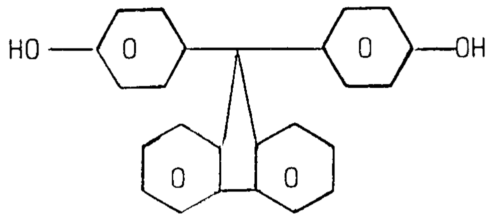 | 268 |
| 12 | 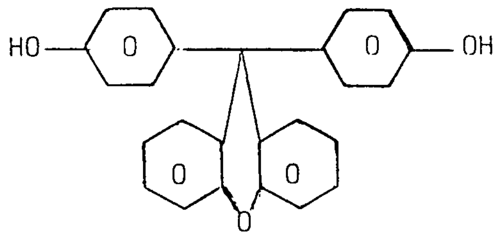 | 235 |
| 13 | 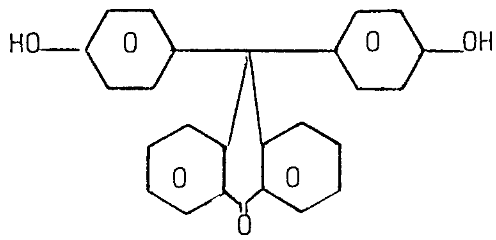 | 276 |
| 14 | 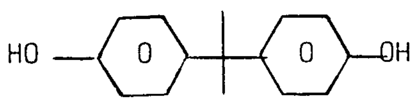 | 238 |

Beispiele 15 - 16

Die Umsetzung wurde wie in Beispiel 5 beschrieben durchgeführt, mit der Ausnahme, daß anstelle des 4,4'-Difluorbenzophenon 4,4'-Difluor-iso- und/oder -terephthalophenon eingesetzt wurden. Das Molverhältnis Bisphenol A zu Cumaranderivat betrug 1 : 1.

Man erhielt Produkte mit folgenden Eigenschaften

| Beispiel Nr. | eingesetztes reaktives Dihalogenid | Glastemperatur (Grad C) |
|---|---|---|
| 15 | 4,4′-Difluor-terephthalophenon | 199 |
| 16 | 4,4′-Difluor-isophthalophenon | 182 |

Zusammensetzung der in Chloroform als Lösungsmittel bestimmten Viskositäten - reduzierte Viskosität $\eta_{sp}/c$ in dl/g, nach DIN 7745, Teil 2, entsprechend ISO 1628/6 - der Polykondensate nach:

| Beispiel Nr. | $\eta_{sp}/c$ (dl/g) |
|---|---|
| 1 | |
| 2 | |
| 3 | |
| 4 | 0,39 |
| 5 | 0,43 |
| 6 | 0,32 |
| 7 | 0,34 |

| Beispiel Nr. | $\eta_{sp}/c$ (dl/g) |
|---|---|
| 8 | 0,29 |
| 9 | 0,26 |
| 10 | 0,70 |
| 11 | 0,30 |
| 12 | 0,28 |
| 13 | 0,30 |
| 14 | 0,42 |
| 15 | 0,29 |
| 16 | 0,34 |

Beispiel 17

Synthese eines Polyethers aus 4,4′-Dichlorbenzophenon (1), Beisphenol A (2) und Dihydroxy-5a, 10b-diphenyl-cumarano-2′,3′,2,3-cumaran (3) im Molverhältnis 1 : 2 : 3 = 4 : 1 : 3.

In einem 250 ml Kolben mit Rührer, Innenthermometer, Stickstoffzuleitung und Wasserabscheider mit aufgesetztem Rückflußkühler wurden 2,85 g (0,0125 mol) Bisphenol A (2), 14,8 g (0,0375 mol) des Cumaranderivates (3), 12,55 g (0,05 mol) 4,4′-Dichlorbenzophenon (1), 11,05 g (0,08 mol) Kaliumcarbonat, 0,1 g Kupfer(I)acetat, 0,4g Kaliumfluorid, 75 ml N-Methylpyrrolidon und 45 ml o-Xylol vorgelegt.

Die Reaktionsmischung wurde nun unter Stickstoffatmosphäre mit einem Ölbad auf Rückflußtemperatur erhitzt und das sich bildende Wasser innerhalb von 2,5 Stunden ausgekreist. Nach vollständiger Entfernung des Wassers wurde das Xylol über den Wasserabscheider bei ca. 180 bis 190 Grad C abdestilliert und das zurückbleibende Reaktionsgemisch für 5 Stunden bei dieser Temperatur gehalten.

Nach Abkühlung wurde der Ansatz mit 50 ml N-Methylpyrrolidon verdünnt und von den festen Bestandteilen des Reaktionsgemisches abgesaugt. Der Polyether wurde anschließend in 1,4 l Ethanol/Wasser (Volumenverhältnis = 1 : 1) ausgefällt, von der Flüssigkeit durch Filtration getrennt und nach 18-stündigem Trocknen bei 150 Grad C im Vakuumtrockenschrank in 300 ml Dichlormethan gelöst und in 1,6 l Ethanol ausgefällt. Das Polykondensat wurde abfiltriert und bei 150 Grad C im Vakuum bis zur Gewichtskonstanz getrocknet. Ausbeute 24 g (91 % d.Th). Das Molekulargewicht Mw des Polykondensates betrug ca. 61 000 (Messung: GPC, Eichung mit Polystyrol).

Beispiel 18

Die Umsetzung wurde wie in Beispiel 17 beschrieben durchgeführt, mit der Ausnahme, daß kein Kaliumfluorid zugesetzt wurde. Man erhielt ein Polykondensat mit einem Molekulargewicht Mw ca. 33 000. Die Ausbeute betrug 24,3 g (92 % d.Th)

Beispiel 19

Die Umsetzung wurde wie in Beispiel 17 beschrieben durchgeführt, mit der Ausnahme, daß kein Kupfer-(I)-acetat zugesetzt wurde. Man erhielt ein Polykondensat mit einem Molekulargewicht Mw ca. 9 000. Die Ausbeute betrug 23,5 g (88 % d.Th).

## Patentansprüche

**1.** Hochtemperaturbeständige aromatische Polyether mit einer reduzierten Viskosität $\eta$sp/C > 0,25 dl/g nach DIN 7745, Teil 2 und mit der wiederkehrenden Struktureinheit (1)

$[(A\text{-}O)_a(B\text{-}O)_b(C\text{-}O)_c]$ (1)

worin
A bedeutet:

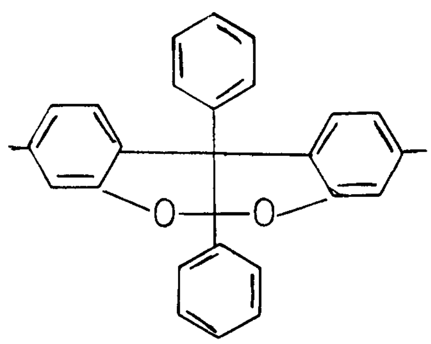

B die folgende Formel hat:

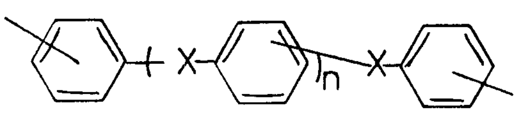

mit n = 0 oder 1, wobei die Reste X gleich oder verschieden sind und für eine der Gruppen

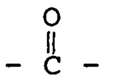 , 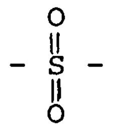 , 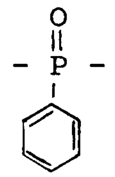 , 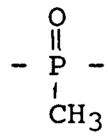

stehen,
C eine oder mehrere andere Gruppen bedeutet, die nicht der Definition von A und B entsprechen, wobei C aromatische Einheiten enthält, die noch über weitere Gruppen, wie beispielsweise Sauerstoff oder Alkylengruppen, miteinander verbunden sind,
wobei das molare Verhältnis der Gruppen (A + C) : B = 1 : 1 bis 1 : 100 ist, mit der Maßgabe,
daß A : C = 100 : 0 bis 1 : 99 ist, falls weniger als 99 Mol.-% der X für

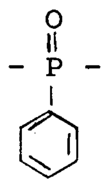 oder 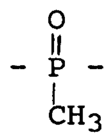

stehen,
und A : C = 99 : 1 bis 1 : 99 ist, falls alle X für

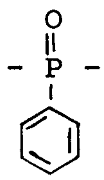 oder 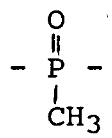

Einheiten stehen.

2. Hochtemperaturbeständige aromatische Polyether nach Anspruch 1, dadurch gekennzeichnet, daß der Anteil an Phosphinoxidgruppen in den B-Bausteinen maximal 90 Mol.-%, vorzugsweise höchstens 50 Mol.-%, der Summe der molaren Anteile der Carbonyl-, Sulfon- und Phosphinoxidgruppen beträgt.

3. Hochtemperaturbeständige aromatische Polyether nach Anspruch 1, dadurch gekennzeichnet, daß diese als B-Bausteine nur solche mit Phosphinoxidgruppen enthalten und dann die molaren Verhältnisse der Bausteine A : C = 90 : 10 bis 10 : 90 sind.

4. Hochtemperaturbeständige aromatische Polyether nach Anspruch 1, dadurch gekennzeichnet, daß diese als B-Bausteine nur solche mit Carbonyl- und/oder Sulfonylgruppen enthalten.

5. Hochtemperaturbeständige aromatische Polyether nach den Ansprüchen 1 bis 4, dadurch gekennzeichnet, daß das molare Verhältnis der Bausteine von (A + C) : B = 1 : 1 beträgt.

6. Hochtemperaturbeständige aromatische Polyether nach den Ansprüchen 1,4 und 5, dadurch gekennzeichnet, daß diese neben den "Cumaran"-Einheiten (A), 4,4'-Benzophenon-Einheiten (B) und 2,2-Bis-(1,4-phenylen)propan-Einheiten (C) in den molaren Verhältnissen (A + C) : B = 1 : 1 mit A : C = 30 : 70 bis 100 : 0 enthalten.

**Claims**

1. High-temperature resistant aromatic polyethers with a reduced viscosity $\eta_{sp}/C > 0.25$ dl/g according to DIN 7745, Part 2 and with the reoccurring structural unit (1)

$[(A\text{-}O)_a(B\text{-}O)_b(C\text{-}O)_c]$ (1)

wherein
A is:

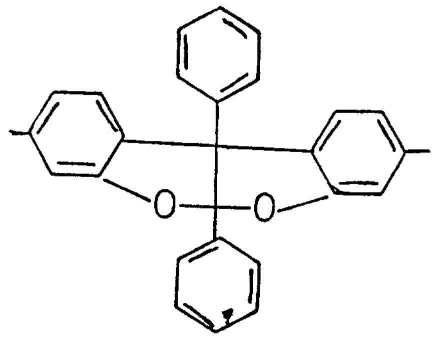

B has the following formula:

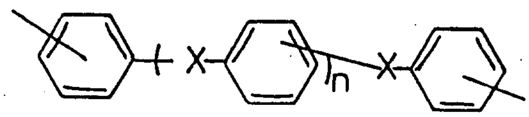

with n = 0 or 1, whereby the groups X are identical or different and are one of the groups

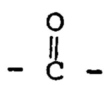 , 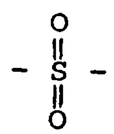 , 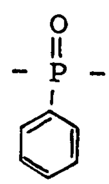 , 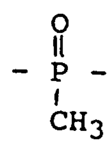 ,

C is one or more groups which do not correspond to the definition of A and B, whereby C contains aromatic units which are also bound to one another via further groups such as oxygen or alkylene groups,
whereby the molar ratio of groups (A + C) : B = 1 : 1 to 1 : 100, with the proviso that
A : C = 100 : 0 to 1 : 99 if less
than 99 mol.-% of X are

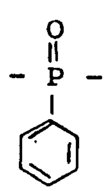 or 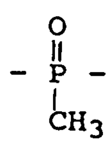 ,

and A : C = 99 : 1 to 1 : 99, if all X groups are

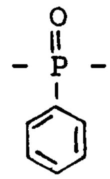
or
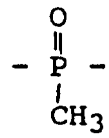

units.

2. High temperature resistant aromatic polyethers according to claim 1, characterised in that the amount of phosphine oxide groups in the B particles is a maximum of 90 mol.-%, preferably a maximum of 50 mol.-%, of the sum of the molar amounts of carbonyl, sulfone and phosphine oxide groups.

3. High temperature resistant aromatic polyethers according to claim 1, characterised in that they contain as B-particles only those with phosphine oxide groups and that then the molar ratios of the particles A : C = 90 : 10 to 10 : 90.

4. High temperature resistant aromatic polyethers according to claim 1, characterised in that they contain as B-particles only those with carbonyl and/or sulphonyl groups.

5. High temperature resistant aromatic polyethers according to claims 1 to 4, characterised in that the molar ratio of the particles of (A + C) : B = 1 : 1.

6. High temperature resistant aromatic polyethers according to claims 1, 4 and 5, characterised in that they contain, in addition to the "coumaran" units (A), 4,4'-benzophenone units (B) and 2,2-bis (1,4-phenylene)propane units (C) in the molar ratios (A + C) : B = 1 : 1 with A : C = 30 : 70 to 100 : 0.

**Revendications**

1. Polyéthers aromatiques résistant aux hautes températures, ayant une viscosité réduite $\eta_{sp}/C>0,25$ dl/g d'après DIN 7745, 2ème partie, et comportant le motif structural répétitif (1)

$[(A\text{-}O)_a(B\text{-}O)_b(C\text{-}O)_c]$ (1)

où
A représente :

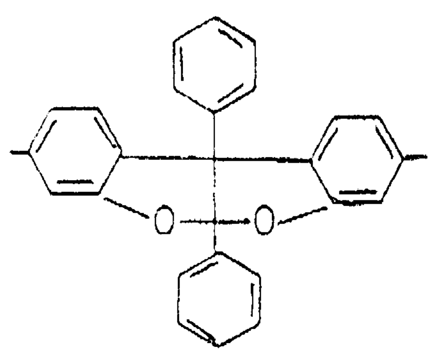

B a la formule suivante :

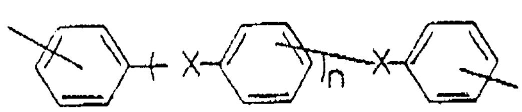

dans laquelle n vaut 0 ou 1, les radicaux X étant identiques ou différents et représentant chacun l'un des groupes suivants :

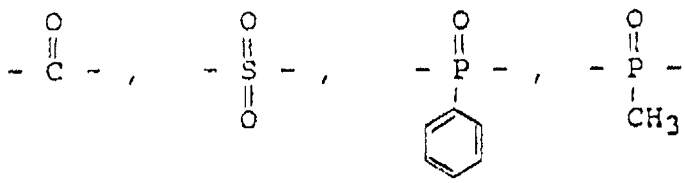

C représente un ou plusieurs autres groupes ne correspondant pas à la définition de A et B, C contenant des motifs aromatiques qui sont encore reliés les uns aux autres par d'autres groupements, tels que des oxygènes ou des groupes alkylènes,
le rapport en moles des groupes (A + C) au groupe B étant de 1:1 a 1:100, à condition que A:C est compris entre 100:0 et 1:99 quand moins de 99 % en moles de X correspondent à

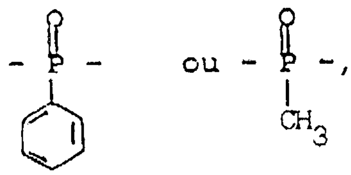

et A:C est compris entre 99:1 et 1:99 quand tous les radicaux X sont des motifs

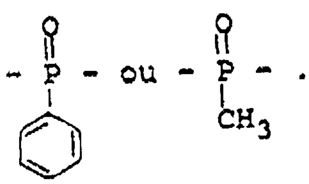

2. Polyéthers aromatiques résistant aux hautes températures selon la revendication 1, caractérisés en ce que la part des groupes oxyde de phosphine dans les composants B est au plus de 90 % en moles et, de préférence, au plus de 50 % en moles, de la somme des fractions molaires des groupes carbonyle, sulfone et oxyde de phosphine.

3. Polyéthers aromatiques résistant aux hautes températures selon la revendication 1, caractérisés en ce qu'ils ne contiennent, en tant que constituants B, que ceux comportant des groupes oxydes de phosphine, le rapport en moles des composants A et C étant de 90:10 à 10:90.

4. Polyéthers aromatiques résistant aux hautes températures selon la revendication 1, caractérisés en ce qu'ils ne contiennent, en tant que composants B, que ceux comportant des groupes carbonyle et/ou sulfonyle.

5. Polyéthers aromatiques résistant aux hautes températures selon les revendications 1 à 4, caractérisés en ce que le rapport en moles des composants (A + C) au composant B est de 1:1.

6. Polyéthers aromatiques résistant aux hautes températures selon les revendications 1, 4 et 5, caractérisés en ce qu'ils contiennent, outre les motifs "cumaran" (A), des motifs 4,4'-benzophénone (B) et des motifs 2,2-bis(1,4-phénylène)propane (C), selon des proportions molaires (A + C):B de 1:1, avec A:C compris entre 30:70 et 100:0.